(19) Europäisches Patentamt
European Patent Office
Office européen des brevets

(11) EP 4 255 625 B1

(12) EUROPEAN PATENT SPECIFICATION

(45) Date of publication and mention of the grant of the patent:
**26.03.2025 Bulletin 2025/13**

(21) Application number: **21835375.3**

(22) Date of filing: **29.11.2021**

(51) International Patent Classification (IPC):
***B01J 31/22*** *(2006.01)*

(52) Cooperative Patent Classification (CPC):
**B01J 31/2239;** B01J 2231/14; B01J 2531/48

(86) International application number:
**PCT/IB2021/061063**

(87) International publication number:
**WO 2022/118170 (09.06.2022 Gazette 2022/23)**

# (54) PROCESS FOR PREPARING ZINC DICARBOXYLATE AND USE THEREOF AS A CATALYST IN THE SYNTHESIS OF POLYALKYLENE CARBONATE FROM CO2 BY HETEROGENEOUS CATALYSIS

VERFAHREN ZUR HERSTELLUNG VON ZINKDICARBOXYLAT UND VERWENDUNG DAVON ALS KATALYSATOR BEI DER SYNTHESE VON POLYALKYLENCARBONAT AUS CO2 DURCH HETEROGENE KATALYSE

PROCÉDÉ DE PRÉPARATION DE DICARBOXYLATE DE ZINC ET SON UTILISATION COMME CATALYSEUR DANS LA SYNTHÈSE DE CARBONATE DE POLYALKYLÈNE À PARTIR DE CO2 PAR CATALYSE HÉTÉROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2020 IT 202000029237**

(43) Date of publication of application:
**11.10.2023 Bulletin 2023/41**

(73) Proprietors:
- **EPOX-CO2 S.R.L.**
  **25065 Lumezzane (BS) (IT)**
- **Rijksuniversiteit Groningen**
  **9712 CP Groningen (NL)**
- **Universita' degli studi di Brescia**
  **25121 Brescia (IT)**

(72) Inventors:
- **TANG, Zhenchen**
  **9712 CP Groningen (NL)**
- **PESCARMONA, Paolo P.**
  **9712 CP Groningen (NL)**
- **SARTORE, Luciana**
  **25121 Brescia (IT)**
- **PANDINI, Stefano**
  **25121 Brescia (IT)**
- **GNALI, Luca**
  **25065 Lumezzane (BRESCIA) (IT)**
- **SALA, Giovanni**
  **25065 Lumezzane (BRESCIA) (IT)**

(74) Representative: **Finetti, Claudia**
**Bugnion S.p.A.**
**Viale Lancetti, 17**
**20158 Milano (IT)**

(56) References cited:
**WO-A1-2013/034489 US-A1- 2011 218 320**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### FIELD OF THE INVENTION

The present invention relates to a process for the synthesis of a zinc-based compound and the subsequent use thereof for the synthesis of a zinc dicarboxylate catalyst to be used for the heterogeneous catalytic copolymerization of a polyalkylene carbonate starting from $CO_2$ and an alkyl epoxide preferably containing at least 3 atoms of carbon.

### PRIOR ART

In the field of materials science, one of the most felt technological needs in the current state of the art is to try to replace the plastic materials obtained from oil with plastic materials (preferably biodegradable) produced from renewable raw materials, while maintaining the existing industrial production chains and the physical-mechanical properties of the final products as much as possible. In fact, the production of plastic is continuously growing and does not show signs of decreasing: from 15 million tons in 1964 to about 400 million in 2016. Today plastic is the third material produced by mankind, with the greatest spread on Earth after steel and cement. The possibility of producing plastics with a minor use of (or ideally without) oil derivatives is therefore a particularly topical area of research and represents, at the same time, a global environmental requirement which cannot be ignored. However, the possibility of reducing dependence on oil resources is still subject to the availability of effective and efficient technologies which should allow a rapid and cost-effective transition towards renewable raw materials, ideally also leading to even more efficient products. The greatest technological frontier to be addressed is not only the replacement of monomers/polymers obtained from oil with monomers/polymers obtained from renewable sources, but also and above all the possibility of finding production processes which allow the performance of the finished products to be maintained (or improved) in terms of mechanical features, economic efficiency and mass production capacity. Every year, the world produces more than 10 billion tons of carbon dioxide due to the combustion of fossil compounds, the refining of oil, fermentation and other production processes. The impact of carbon dioxide emissions is further increased by deforestation and/or fires affecting large portions of forests. This has caused the increase in the concentration of carbon dioxide in the atmosphere, causing an increasingly more serious greenhouse effect. In fact, carbon dioxide ($CO_2$) is one of the so-called greenhouse-effect gases and the scientific community now commonly accepts the role which the increase of greenhouse gases has in the climate and environmental changes underway. At the same time, carbon dioxide is an important source of carbon in nature, together with the reserves found in the deep ocean, marine sediments, the terrestrial biosphere and the surface oceans. With the increase in the amount of $CO_2$ due to human activities, the exploration of new technologies which can use carbon dioxide, currently considered a waste product harmful to the environment, instead as a new resource for new uses, has attracted more and more interest in the scientific community. Among these, the use of carbon dioxide for the production of plastics, in particular polyalkylene carbonates (belonging to the class of polycarbonates), by copolymerization with epoxides has attracted a lot of attention due to the high application value thereof in terms of environmental impact and the prospects for technological development. However, the catalysts used for such a reaction generally have a low catalytic efficiency and/or a high production cost, thereby limiting the use thereof at an industrial level. The catalysts currently most commonly used in industry for this reaction are zinc dicarboxylic acids, especially zinc glutarate. For example, CN101468320A describes the synthesis of a composite material based on zinc oxide which is subsequently used, together with a dicarboxylic acid (such as glutaric acid) to obtain a catalyst used in the copolymerization of an epoxide with carbon dioxide. The synthesis of a zinc oxide-based composite material described herein involves the use of a sulphuric acid solution and a heat treatment cycle to activate an inorganic matrix (such as: montmorillonite, mica or vermiculite) to which a solution of zinc nitrate, anhydrous ethanol and urea is added. The product thus obtained is then calcined until a ZnO/inorganic matrix complex is obtained. However, such a reaction involves the use of a solid phase (represented by the inorganic matrix) and a liquid phase which can potentially have numerous disadvantages such as high costs (related to the raw materials, the numerous synthesis steps and/or a potentially low yield) and, consequently, obtaining a catalyst which does not meet the desired requirements.

WO2013034489A1 in the name of Basf SE and US2011218320A1 in the name of Steinke Tobias Heinz et al. are aimed to increase the catalytic activity of zinc dicarboxylate catalysts in the reaction of epoxides and carbon dioxide to form polycarbonates.

Therefore, the need remains in the sector to provide an effective catalytic process for the production of plastic materials which are obtained as much as possible, if not totally, from $CO_2$ instead of from raw materials deriving from oil and which, at the same time, are provided with technical characteristics such as to fully meet industrial needs, both regarding application and process, and therefore able to replace plastics deriving from fossil sources. The present invention solves the problems of the known art by providing a new process for the synthesis of a zinc dicarboxylate catalyst. The catalyst obtained by the process according to the invention allows to prepare, directly from $CO_2$, and with a high catalytic activity, high selectivity and high purity, a polyalkylene carbonate having a combination of physical-mechanical characteristics not reported in the known polycarbonates, namely a polyalkylene carbonate which is a thermoplastic polymer, biodegradable,

with a high flexibility and ductility, good resistance and/or sufficient rigidity, a high and immediate percentage of strain recovery following a deformation, which presents self-healing properties and with the desired values of $T_g$ and percentage of ether bonds without the use of plasticizers.

## SUMMARY OF THE INVENTION

The present invention relates to a process for the synthesis of a zinc-based compound comprising a mixture of ZnO and a compound having the general formula (I):

$$Zn_x(OH)_y(L)_z \cdot nH_2O \qquad \text{Formula (I)}$$

wherein L is selected in the group consisting of: $NO_3$, $CH_3CO_2$, $(SO_4)_{0.5}$, halide, and acetyl acetonate (AcAc),

$$2x = y + z;$$

wherein

x is comprised between 1 and 5,
y is comprised between 1 and 8,
z is comprised between 1 and 2, and
n is comprised between 0 and 20,
said process comprising the steps of:

(a) providing a solution of a zinc precursor having the general formula $Zn(L)_2 \cdot nH_2O$, wherein n and L are as defined above;
(b) adding a solution of a base to said solution of a zinc precursor, thereby obtaining a precipitate;
(c) separating the precipitate from the supernatant solution and subjecting the solid thus separated to a heat treatment:

- at a temperature (T): 30 °C < T < 90 °C and for a period of time (t): 20 hours < t ≤ 60 hours; or
- at a temperature (T): 90 °C ≤ T ≤ 150 °C and for a period of time (t): 20 minutes ≤ t ≤ 20 hours; or
- at a temperature (T): 150 °C < T ≤ 400 °C and for a period of time (t): 20 minutes ≤ t ≤ 15 hours

The present invention relates to a process for the synthesis of a zinc dicarboxylate catalyst, further comprising the step:
(d) reacting said zinc-based compound obtained in step (c) of the process described above with a dicarboxylic acid, preferably a saturated aliphatic dicarboxylic acid.
The present invention also relates to said zinc-based compound and said zinc dicarboxylate catalyst respectively obtainable by the processes described above. Furthermore, the present invention relates to a process for the synthesis of polyalkylene carbonate by means of a heterogeneous catalytic copolymerization reaction comprising the steps of:
(e) reacting carbon dioxide with an alkyl epoxide, preferably containing at least 3 atoms of carbon, preferably in the absence of an organic solvent, in the presence of said zinc dicarboxylate catalyst as described above.
A polyalkylene carbonate is obtainable by said process. Preferably, said polyalkylene carbonate has a weight-average molecular weight ($M_w$) comprised between 10 and 300 kg/mol and is characterized by having:

i) a percentage of ether bonds comprised between 0 and 30% (relative to the total carbonate bonds and ether bonds);
ii) self-healing properties in a time between 1 minute and 4 days, preferably between 15 minutes and 4 days, preferably between 30 minutes and 4 days, preferably between 1 hour and 4 days, preferably between 1 hour and 8 hours, even more preferably between 1 minute and 3 hours, even more preferably between 15 minutes and 3 hours, even more preferably between 1 hour and 3 hours, even more preferably between 2 hours and 4 hours, even more preferably between 2 hours and 3 hours;
iii) a strain recovery comprised between 70 and 100% following a percentage elongation greater than 600%;
iv) a percentage elongation at break ($\varepsilon_b$) greater than 600%;
v) an elastic modulus (E) comprised between 50 and 1000 MPa.

Preferably, said polyalkylene carbonate is characterized in that it further possesses one or more of the following characteristics:

vi) a yield strength (δy) greater than 0.5 MPa; and/or
vii) an ultimate tensile strength ($\delta_b$) greater than 1 MPa; and/or
viii) a glass transition temperature ($T_g$) comprised between 0 and 35 °C.

## BRIEF DESCRIPTION OF THE FIGURES

Figure 1 shows an XRD diffractogram of the different zinc-based compounds prepared as described in Example 1.
Figure 2 shows an XRD diffractogram of the different zinc glutarate catalysts prepared as described in Example 2.
Figure 3 shows an XRD diffractogram of the different zinc dicarboxylate catalysts prepared as described in Example 3.
Figure 4 shows an $^1$H-NMR spectrum of the polypropylene carbonate (sample PPC-12) obtained as described in Example 5.
Figure 5 shows a $^{13}$C-NMR spectrum of the polypropylene carbonate (sample PPC-12-3b) obtained as described in Example 5.
Figure 6 shows a photo of a film obtained by moulding the sample PPC-6 as described in Example 6, in which the transparency of the film can be appreciated.
Figure 7 shows a photo depicting the samples of the transversely cut PPC-6 material (left panel). In the right panel, the overlap between the two sections is shown, made on a sheet of graph paper by simply overlapping (without compressing and without heating) the central part by about 4 mm (indicated by the arrows).
Figure 8 shows the mechanical characteristics of stiffness and extensibility of PPC according to the present disclosure compared to the characteristics of softer, more flexible polymers of fossil origin.

## DETAILED DESCRIPTION OF THE INVENTION

For the purposes of the present disclosure, the weight-average molecular weight (Mw) and number-average molecular weight (Mn) are determined by gel permeation chromatography (GPC) as, for example, described in Example 5.
For the purposes of the present disclosure, the extensibility and mechanical return characteristics, i.e., mechanical return (iii), percent elongation at break (iv), modulus of elasticity (v), yield strength (vi) and tensile strength (vii), are determined by uniaxial tensile mechanical testing (testing) using an electromechanical dynamometer as, for example, described in Example 7.
For the purposes of the present disclosure, said time "between 1 minute and 4 days" means that the self-healing (self-healing) properties of the polyalkylene carbonate according to the present disclosure are achieved/expected (i.e., in other words, self-healing occurs) in period of time equal to any value between said two extremes, such as, for example, 1 minute, 2 minutes, 3 minutes, 4 minutes, 5 minutes, 6 minutes, 7 minutes, 8 minutes, 9 minutes, 10 minutes, 11 minutes, 12 minutes, 13 minutes, 14 minutes, 15 minutes, 16 minutes, 17 minutes, 18 minutes, 19 minutes, 20 minutes, 21 minutes, 22 minutes, 23 minutes, 24 minutes, 25 minutes, 26 minutes, 27 minutes, 28 minutes, 29 minutes, 30 minutes, 31 minutes, 32 minutes, 33 minutes, 34 minutes, 35 minutes, 36 minutes, 37 minutes, 38 minutes, 39 minutes, 40 minutes, 41 minutes, 42 minutes, 43 minutes, 44 minutes, 45 minutes, 46 minutes, 47 minutes, 48 minutes, 49 minutes, 50 minutes, 51 minutes, 52 minutes, 53 minutes, 54 minutes, 55 minutes, 56 minutes, 57 minutes, 58 minutes, 59 minutes, 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, 21 hours, 22 hours, 23 hours, 1 day, 2 days, 3 days, 4 days.
The same definition (suitably adapted to individual cases) also applies, for the purposes of the present invention, to similar expressions of numerical intervals as described for the different embodiments of the present invention.
The present invention relates to a process for the synthesis of a zinc-based compound comprising a mixture of ZnO and a compound having the general formula (I):

$$Zn_x(OH)_y(L)_z \cdot nH_2O \qquad \text{Formula (I)}$$

wherein L is selected in the group consisting of: $NO_3$, $CH_3CO_2$, $(SO_4)_{0,5}$, halide, and acetyl acetonate (AcAc),

$$2x = y + z;$$

wherein

x is comprised between 1 and 5,
y is comprised between 1 and 8,
z is comprised between 1 and 2, and

n is comprised between 0 and 20,
said process comprising the steps of:

(a) providing a solution of a zinc precursor having the general formula $Zn(L)_2 \cdot nH_2O$, wherein n and L are as defined above;
(b) adding a solution of a base to said solution of a zinc precursor, thereby obtaining a precipitate;
(c) separating the precipitate from the supernatant solution and subjecting the solid thus obtained to a heat treatment:

- at a temperature (T): 30 °C < T < 90 °C and for a period of time (t): 20 hours < t ≤ 60 hours; or
- at a temperature (T): 90 °C ≤ T ≤ 150 °C and for a period of time (t): 20 minutes ≤ t ≤ 20 hours; or
- at a temperature (T): 150 °C < T ≤ 400 °C and for a period of time (t): 20 minutes ≤ t ≤ 15 hours.

According to an embodiment of the invention, n is comprised between 0 and 10, or between 0 and 8, or between 0 and 6, or between 2 and 6. According to another embodiment of the invention, n is comprised between 1 and 20, or between 1 and 10, or between 2 and 20, or between 2 and 10. As demonstrated in the Examples section, and in particular as is clear from the data collected in Table 4 related to yield and productivity, the Applicants have found that, thanks to the synthesis conditions of steps (a)-(b) and, in particular, thanks to the heat treatment of step (c), a zinc-based compound can be obtained comprising a mixture of ZnO and a compound of formula (I), i.e., an intermediate compound between the zinc precursor used in the synthesis, $Zn(L)_2 \cdot nH_2O$, and ZnO. Such a mixture allows to obtain a zinc dicarboxylate catalyst having a higher catalytic activity and, consequently, a higher production yield of the polyalkylene carbonate, with respect to the use of a known catalyst obtained from pure ZnO. The temperature and time conditions of step (c) are suitably calibrated and modulated in order to obtain the mixture of ZnO and a compound of formula (I). In particular, if high temperatures (i.e., towards the upper end of the aforementioned range) are applied, the heat treatment times will be shorter (i.e., towards the lower end of the aforementioned range); while if lower temperatures (i.e., towards the lower end of the aforementioned range) are applied, the heat treatment times will be longer (i.e., towards the upper end of the aforementioned range). According to an embodiment of the invention, said zinc-based compound consists of a mixture of ZnO and of said compound having the general formula (I). According to a preferred embodiment of the invention, L is nitrate ($NO_3$). Preferably, the solution of a zinc precursor of step (a) has general formula $Zn(NO_3)_2 \cdot nH_2O$, more preferably $Zn(NO_3)_2 \cdot 6H_2O$.
According to a preferred embodiment of the invention, said compound having general formula (I) has the following formula: $Zn_5(OH)_8(NO_3)_2 \cdot 2H_2O$.
According to an embodiment of the invention, said compound having general formula (I) has the following formula:

$$Zn_3(OH)_4(NO_3)_2.$$

According to an embodiment of the invention, said zinc-based compound comprises or consists of a mixture of ZnO and of one or more compounds having general formula (I) as described above. According to an embodiment, said solution of a base of step (b) is a solution of a base selected from the group consisting of: ammonia/ammonium hydroxide ($NH_4OH$), NaOH, KOH. Preferably, said solution of a base is an aqueous solution. More preferably, said solution of a base is an ammonia solution, preferably an aqueous ammonia solution. According to a preferred embodiment, when the heat treatment of step (c) is carried out at a temperature of 90 °C and for a time of 20 hours, a zinc-based compound is obtained comprising a mixture of ZnO and a compound having formula $Zn_5(OH)_8(NO_3)_2 \cdot 2H_2O$. According to another embodiment, when the heat treatment of step (c) is carried out at a temperature of 120 °C and for a time of 20 hours, a zinc-based compound is obtained comprising a mixture of ZnO and a compound having formula $Zn_5(OH)_8(NO_3)_2 \cdot 2H_2O$, wherein the relative amount of ZnO in the mixture is higher than the embodiment in which the heat treatment is carried out at 90 °C. According to another disclosure, when the heat treatment of step (c) is carried out at a temperature of 150°C and for a time of 20 hours, a zinc-based compound is obtained comprising a mixture of ZnO and a compound having formula $Zn_5(OH)_8(NO_3)_2 \cdot 2H_2O$, wherein the relative amount of ZnO in the mixture is higher than the embodiment in which the heat treatment is carried out at 90°C. Preferably, according to any of the embodiments defined above, said zinc-based compound comprises said ZnO and said compound having general formula (I) in a mass ratio comprised between 0.1 and 10, preferably comprised between 0.2 and 5. The present invention also relates to a zinc-based compound comprising a mixture of ZnO and a compound having general formula (I) as defined above obtainable by the aforesaid process. The present invention also relates to a process for the synthesis of a zinc dicarboxylate catalyst, comprising steps (a)-(c) as described above and the further step:
(d) reacting said zinc-based compound with a dicarboxylic acid.
Preferably said step (d) of reacting said zinc-based compound with a dicarboxylic acid is carried out in a solvent,

preferably in an aprotic solvent. Preferably said solvent is selected from the group consisting of: toluene, benzene, xylene (and the isomers thereof), mesitylene, chloroform, dichloromethane, and a combination thereof. For example, said step (d) is carried out at a reaction temperature comprised between 50 and 130 °C, preferably between 70 and 110 °C. For example, said step (d) of reacting said zinc-based compound with a dicarboxylic acid is carried out for a period of time comprised between 12 and 48 hours, preferably between 18 and 36 hours.

According to a preferred embodiment of the invention, said dicarboxylic acid is a saturated aliphatic dicarboxylic acid i.e. containing neither aromatic groups nor double bonds. Preferably said saturated aliphatic dicarboxylic acid contains from 4 to 12 carbon atoms ($C_4$-$C_{12}$). According to a particularly preferred embodiment, said dicarboxylic acid is neither fumaric acid nor terephthalic acid.

Preferably, said zinc dicarboxylate catalyst is selected from zinc dicarboxylate compounds having an alkyl chain between the two carboxyl groups. More preferably, said zinc dicarboxylate catalyst is selected from the group consisting of: zinc glutarate (ZnGA), succinate (ZnSA), zinc adipate (ZnAA),; therefore, the dicarboxylic acid of step (d) is selected from the group consisting of glutaric acid, succinic acid, adipic acid, , respectively. According to a particularly preferred embodiment, said process for the synthesis of said zinc dicarboxylate catalyst optionally comprises, after step (d) also a step (d') of carrying out a solid-liquid separation and subjecting the solid thus separated to a heat treatment at a temperature comprised between 90 and 150 °C. A zinc dicarboxylate catalyst obtainable by the process described above is a further object of the present invention. As mentioned above, without wishing to be bound by a specific theory, the Applicants have found that, thanks to the synthesis conditions of steps (a)-(b) and, in particular, thanks to the heat treatment of step (c), which allow to obtain a zinc-based compound comprising a mixture of ZnO and a compound having general formula (I) (i.e., of an intermediate compound between the zinc precursor used in the synthesis $Zn(L)_z \cdot nH_2O$ and ZnO), it is possible to obtain a zinc dicarboxylate catalyst having a particularly high catalytic activity for the copolymerization reaction of a polyalkylene carbonate starting from $CO_2$. As also demonstrated in the Examples section, the use of a different zinc-based compound with respect to the mixture according to the present invention (such as commercial ZnO or ZnO as reported in literature) in the synthesis of the zinc dicarboxylate catalyst, results in a catalyst having a lower catalytic activity. Similarly, the use of different temperatures and times in the heat treatment of step (c) also results in a different zinc-based compound than that of the present invention and which does not produce a zinc dicarboxylate catalyst having an equally high catalytic activity. Advantageously, as also demonstrated in the Examples below, the zinc dicarboxylate catalyst according to the present invention is characterized by having a catalytic activity towards the heterogeneous catalytic copolymerization reaction for the synthesis of polyalkylene carbonate starting from carbon dioxide and an alkyl epoxide, preferably containing at least 3 atoms of carbon, which reaches a productivity of 2.8 $g_{polyalkylene\ carbonate}/(g_{catalyst} \cdot hour)$ for example in the case where the epoxide is propylene oxide, using 0.5 g catalyst for every 50 mL of propylene oxide, at a $CO_2$ pressure of 40 bar with a reaction time of 20 hours at 80°C. Furthermore, as demonstrated in the Examples, the zinc dicarboxylate catalyst according to the present invention is also characterized by having a high selectivity towards the heterogeneous catalytic copolymerization reaction for the synthesis of polyalkylene carbonate starting from carbon dioxide and an alkyl epoxide, preferably containing at least 3 atoms of carbon. In addition, without wishing to be bound by a specific theory, the Applicants have nevertheless found that, thanks to the process according to the present invention, in particular thanks to steps (a)-(d), it is possible to obtain a zinc dicarboxylate catalyst having a high degree of purity from XRD. In other words, said catalyst has as main crystalline phase observed in XRD dicarboxylate zinc and negligible impurities of zinc oxide.

The present invention further relates to a process for the synthesis of polyalkylene carbonate by means of a heterogeneous catalytic copolymerization reaction comprising the steps of:

(e) reacting carbon dioxide with an alkyl epoxide, preferably containing at least 3 atoms of carbon, preferably in the absence of an organic solvent, in the presence of at least one zinc carboxylate catalyst as described above. According to a particularly preferred embodiment, said step (e) is carried out by heating at a temperature comprised between 30 and 150 °C, more preferably between 40 and 100 °C. Preferably, said step (e) is carried out at a pressure ($P_{CO2}$) comprised between 1 and 80 bar, preferably between 20 and 60 bar. More preferably, said step (e) is carried out for a period of time comprised between 1 and 40 hours, preferably between 2 and 20 hours. Preferably said polyalkylene carbonate is polypropylene carbonate (PPC) and, therefore, said alkyl epoxide of step (e) is propylene oxide (PO). Preferably, the aforesaid process for the synthesis of a polyalkylene carbonate by means of a heterogeneous catalytic copolymerization reaction according to the present invention, and in particular the use of the zinc dicarboxylate catalyst according to the present invention allows to obtain said polyalkylene carbonate with a reaction yield which reaches 28.7 $g/g_{cat}$ in the case where, for example, the alkyl epoxide is propylene oxide and 0.5 g of catalyst are used for every 50 mL of propylene oxide, at a $CO_2$ pressure of 40 bar with a reaction time of 20 hours at 80°C. According to a particularly preferred embodiment, said step (e) is carried out by subjecting said alkyl epoxide to a dehydration pretreatment, preferably by anhydrifying said alkyl epoxide with a molecular sieve, more preferably for a period of time of at least 12 hours. Without wishing to be bound by a specific theory, the Applicants have found that said dehydration pretreatment of alkyl epoxide is particularly advantageous, as it allows to obtain a doubled yield of polyalkylene carbonate with respect to a process in which said alkyl epoxide is used in the reaction without said pretreatment. According to such an embodiment, said reaction yield reaches 56.2 $g/g_{cat}$ using

for example as alkyl epoxide, propylene oxide and using 0.5 g of catalyst for every 50 mL of propylene oxide, at a $CO_2$ pressure of 40 bar with a reaction time of 20 hours at 80°C. According to a preferred embodiment, the process according to the present invention (steps (a)-(e)) does not involve the addition of plasticizers. A polyalkylene carbonate is obtainable by the process described above.

A carbonate polyalkylene is obtainable by the above-described process, wherein said carbonate polyalkylene has a weight average molecular weight (Mw) between 10 and 300 kg/mol, preferably between 30 and 300 kg/mol and is characterized by having:

- a percentage of ether bonds, relative to the total of carbonate bonds and ether bonds, between 0 and 30%, preferably between 3 and 30%, preferably between 3 and 25%;
- a mechanical return in the range of 70 to 100% following a percent elongation greater than 600%;
- a percentage elongation at break (εb) greater than 600%;
- an elastic modulus (E) between 50 and 1000 MPa.

According to a preferred disclosure, said polyalkylene carbonate (not part of the invention) has a weight-average molecular weight ($M_w$) comprised between 10 and 300 kg/mol, preferably between 30 and 300 kg/mol, and is characterized by having:

i) a percentage of ether bonds (relative to the total of carbonate bonds and ether bonds), comprised between 0 and 30%, preferably comprised between 3 and 30%, preferably between 3 and 25%;
ii) self-healing properties in a time between 1 minute and 4 days, preferably between 15 minutes and 4 days, preferably between 30 minutes and 4 days, preferably between 1 hour and 4 days, preferably between 1 hour and 8 hours, even more preferably between 1 minute and 3 hours, even more preferably between 15 minutes and 3 hours, even more preferably between 1 hour and 3 hours, even more preferably between 2 hours and 4 hours, even more preferably between 2 hours and 3 hours;
iii) a strain recovery comprised between 70 and 100% following a percentage elongation greater than 600%;
iv) a percentage elongation at break ($\varepsilon_b$) greater than 600%;
v) an elastic modulus (E) comprised between 50 and 1000 MPa.

According to a disclosure, said percentage of ether bonds i) is comprised between 4 and 30%, preferably between 4 and 25%, preferably between 5 and 20%, preferably between 5 and 15%.

According to a disclosure, said strain recovery iii) is comprised between 70 and 100%, preferably comprised between 75 and 100%, following a percentage elongation greater than 600%, preferably greater than 700%, more preferably greater than 800%, more preferably greater than 900%, even more preferably greater than 950%, more preferably comprised between 600 and 950%. According to a disclosure, said percentage elongation at break iv) is greater than 700%, more preferably greater than 800%, more preferably greater than 900%, even more preferably greater than 950%, more preferably comprised between 600 and 950%. According to a disclosure, said elastic modulus v) is preferably comprised between 100 and 1000 Mpa, more preferably between 100 and 600 Mpa, even more preferably between 100 and 500 MPa.

For the purposes of the present disclosure, "self-healing properties" means that the polyalkylene carbonate according to the present disclosure is capable of being completely and autonomously healed or has the ability to recover physical and structural integrity, lost following a cut and/or a break, with total or partial, preferably total, restoration of the mechanical properties without applying any pressure and/or change in temperature conditions.

In other words, the term "self-healing" refers to the ability of the material to repair itself completely and autonomously. More specifically, in the event of defects such as through holes or tears, the material can be repaired by overlapping the flaps surrounding the area affected by the defect. The surfaces thus overlapped, thanks to the self-healing properties of the material, will adhere at first and at a later time interpenetrate each other.

For the purposes of the present disclosure, the complete (and self-healing) property as defined above is measured by tensile testing (method of evaluating adhesion on overlapping flaps "lap shear joints") and by delamination testing (method of evaluating adhesion by delamination) both performed by means of an electromechanical dynamometer (as described, for example, in Example 8).

Preferably, the polyalkylene carbonate according to the present disclosure is characterized by having self-healing properties which lead to a complete and autonomously self-healing in a period of time comprised between 1 minute and 4 days, preferably between 15 minutes and 4 days, preferably between 30 minutes and 4 days, preferably between 1 hour and 4 days, preferably between 1 hour and 8 hours, even more preferably between 1 minute and 3 hours, even more preferably between 15 minutes and 3 hours, even more preferably between 1 hour and 3 hours, even more preferably between 2 hours and 4 hours, even more preferably between 2 hours and 3 hours. Advantageously, the aforesaid ether bond percentage values (which make the polyalkylene carbonate a ductile and workable material), in combination with the

characteristics of self-healing and high strain recovery, elastic modulus and elongation, (these being new and desirable characteristics for a variety of different applications), make the polyalkylene carbonate of the present disclosure an extremely versatile material with desired mechanical performance in different fields of application. Preferably, said polyalkylene carbonate is characterized in that it further possesses one or more of the following characteristics:

vi) a yield strength ($\delta y$) greater than 0.5 Mpa, preferably greater than 1 Mpa; and/or
vii) an ultimate tensile strength ($\delta_b$) greater than 1 MPa, preferably greater than 2 MPa, even more preferably comprised between 2 and 20 MPa; and/or
viii) a glass transition temperature ($T_g$) comprised between 0 and 35 °C, preferably between 0 and 30 °C, preferably between 0 and 25 °C, preferably between 5 and 25 °C, preferably between 6 and 25 °C, preferably between 5 and 15 °C.

According to a disclosure, said glass transition temperature is comprised between 4 and 35 °C, preferably between 4 and 20 °C, preferably between 4 and 25 °C, preferably between 4 and 15 °C, preferably between 5 and 15 °C. According to a preferred disclosure, said polyalkylene carbonate is characterized in that it further possesses at least two of the characteristics vi)-viii), preferably at least the characteristic vi) and the characteristic vii). According to a particularly preferred disclosure, said polyalkylene carbonate is characterized in that it further and simultaneously possesses all three characteristics vi)-viii).
Without wishing to be bound to a specific theory, it is possible to claim that the presence of the aforementioned ether bonds allows for the desired glass transition temperature ($T_g$) values as described above and, consequently, the desired characteristics attached thereto.
According to any of the disclosure described above, said polyalkylene carbonate is preferably an amorphous polymer, i.e., a polymer which does not have crystalline phases. According to any of the disclosures described above, said polyalkylene carbonate is preferably a thermoplastic polymer. According to any of the disclosures described above, said polyalkylene carbonate may comprise at least one additive selected in the group consisting of: a colourant, a pigment, a filler, preferably an inorganic filler, a natural fibre, wood flour, a crosslinker, a plasticizer, an antistatic, an antioxidant, an active pharmaceutical ingredient or a pharmaceutical formulation comprising it, an active cosmetic ingredient or a cosmetic formulation comprising it, a fertilizer, or a combination thereof. Preferably, said polyalkylene carbonate is thermally stable up to a temperature ≥ 190 °C, more preferably ≥ 200 °C, even more preferably at a temperature comprised between 190 and 250 °C.
According to a preferred form of disclosure, the polyalkylene carbonate obtainable by the process of the present invention as described above is characterized by comprising an amount of cyclic alkylene carbonate > 0%, preferably between >0% and 5%, more preferably between 0.5 and 5%, even more preferably between 1% and 5% by weight. In other words, according to such a preferred disclosure, the polyalkylene carbonate obtainable by the process according to the present invention may contain a certain amount of cyclic alkylene carbonate as described above.
Without wishing to be bound by a specific theory, it can be argued that, as in the case of the ether bonds described above, the presence of said cyclic alkylene carbonate within the polyalkylene carbonate also contributes to obtaining the desired glass transition temperature ($T_g$) values described above and, consequently, also the other characteristics related to said glass transition temperature which make the polyalkylene carbonate of the present disclosures an extremely versatile material with desired performance in different fields of application.
According to a particularly preferred disclosure (not part of the invention) said polyalkylene carbonate is polypropylene carbonate (PPC).
Preferably, according to such a disclosure, the polypropylene carbonate has the general formula (II):

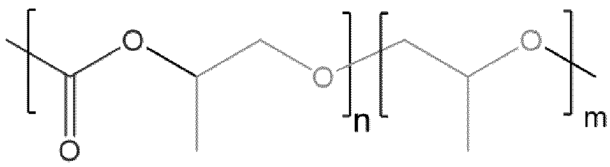

(II)

wherein m is comprised between 0 and 0.43n, preferably between 0.031n and 0.43n, preferably between 0.031n and 0.33n. Without wishing to be bound by a specific theory, the Applicants have found that the polyalkylene carbonate obtainable by the process according to the present invention, preferably polypropylene carbonate (PPC), possesses the chemical-physical and mechanical characteristics listed above which make it advantageous for a variety of different applications.
Preferably, according to such a preferred disclosure, the polypropylene carbonate (PPC) obtainable by the

process of the present invention as described above is characterized by comprising an amount of cyclic propylene carbonate (CPC) > 0%, preferably between >0% and 5%, more preferably between 0.5% and 5%, even more preferably between 1% and 5% by weight. In other words, according to such a preferred disclosure, the polypropylene carbonate obtainable by the process according to the present invention may contain a certain amount of cyclic propylene carbonate (CPC) as described above.

Without wishing to be bound by a specific theory, it can be argued that, as in the case of the ether bonds described above, the presence of said cyclic propylene carbonate within the carbonated polypropylene also contributes to obtaining the desired glass transition temperature ($T_g$) values described above and, consequently, also the other characteristics related to said glass transition temperature which make the carbonated polypropylene of the present disclosure an extremely versatile material with desired performance in different fields of application.

## EXAMPLES

Example 1 - preparation of the zinc-based compound (comprising a mixture of ZnO and the compound of general formula (I)) as a precursor for the synthesis of zinc carboxylate catalysts

The zinc-based compound according to the present invention was synthesized according to the following.

$Zn(NO_3)_2 \cdot 6H_2O$ (29.8 g) was dissolved in Milli-Q water (1000 mL) to form a 0.1 mol/L zinc nitrate solution. An aqueous ammonia solution (13.6 g, 25% ammonia by weight) was added in drops to said zinc nitrate solution under vigorous mechanical stirring (at a rate of 400 rpm) until a suspension comprising a white precipitate was obtained. Said suspension was then subjected to an aging treatment at room temperature (RT) for 2 hours (2h) under stirring. Subsequently, it was filtered and washed with 1 L of water. The white powder thus obtained was subjected to a heat treatment at different temperatures (shown in Table 1) for 20 hours (20h). Each sample of zinc-based compound obtained following each heat treatment was classified as a "ZnO-X" sample (with X indicating the number of the experimental test performed and identifying the different samples), as follows.

**Table 1**

| ZnO-X | Source of zinc | Synthesis conditions | Heat-treatment temperature | Notes |
|---|---|---|---|---|
| ZnO | Commercial | | | Aldrich |
| ZnO-01 | $Zn(NO_3)_2$ + 2 $NH_3 \cdot H_2O$ | RT, 2h, 400 rpm | 180 °C | |
| ZnO-02 | $Zn(NO_3)_2$ + 2 $NH_3 \cdot H_2O$ | RT, 2h, 400 rpm | 180 °C, 20h | Same conditions as ZnO-01, but not reactive in the synthesis. |
| ZnO-03 | $Zn(NO_3)_2$ + 2 $NH_3 \cdot H_2O$ | RT, 2h, 400 rpm | 250 °C, 20h | |
| ZnO-04 | $Zn(NO_3)_2$ + 2 $NH_3 \cdot H_2O$ | RT, 2h, 400 rpm | 180 °C, 20h | |
| ZnO-06 | $Zn(NO_3)_2$ + 2 $NH_3 \cdot H_2O$ | RT, 2h, 400 rpm | RT | |
| ZnO-07 | $Zn(NO_3)_2$ + 2 $NH_3 \cdot H_2O$ | RT, 2h, 400 rpm | 90 °C, 20h | mixture |
| ZnO-08 | $Zn(NO_3)_2$ + 2 $NH_3 \cdot H_2O$ | RT, 2h, 400 rpm | 120 °C, 20h | mixture |
| ZnO-09 | $Zn(NO_3)_2$ + 2 $NH_3 \cdot H_2O$ | RT, 2h, 400 rpm | 150 °C, 20h | mixture |
| ZnO-10 | $Zn(NO_3)_2$ + 2 $NH_3 \cdot H_2O$ | RT, 2h, 400 rpm | 180 °C, 20h | Same conditions as ZnO-01 but shows a XRD diffractogram wherein the $Zn_3(OH)_4(NO_3)_2$ signal is absent. |

From the XRD diffractograms shown in Figure 1, it can be seen how, among the different zinc-based compounds synthesized, the compounds subjected to a heat treatment at a temperature of 180 °C for 20 hours (20h) (such as in the case of ZnO-02, ZnO-04 or ZnO-10) have the characteristic peaks of ZnO indicating that a transformation has occurred in

zinc oxide. Conversely, in the absence of such a heat treatment (see sample ZnO-6), the compound does not comprise peaks which can be connected to the presence of ZnO but instead has characteristic peaks of zinc dihydroxide ($Zn(OH)_2$) and an intermediate species of zinc hydroxylate nitrate (zinc hydroxy-nitrate) having formula $Zn_5(OH)_8(NO_3)_2(H_2O)_2$. In the case of heat treatment at intermediate temperatures, it is possible to observe how these compounds show peaks related to the presence of zinc hydroxy-nitrate and peaks related to ZnO, the latter having a lower intensity than a typical ZnO peak. This indicates a less defined structure. Without wishing to be bound by a specific theory, it is however possible to argue that the presence of a phase of zinc hydroxy-nitrate together with zinc oxide, with respect to a pure ZnO, is a favourable characteristic in the subsequent reaction with a dicarboxylic acid to obtain a zinc dicarboxylate catalyst with high activity in the copolymerization between $CO_2$ and an epoxide. In light of this, it can therefore be concluded that, in the case of heat treatment at temperatures comprised between 90 and 150 °C, there is actually the formation of a mixture of ZnO (see characteristic peaks) and intermediate compounds having general formula (I), in particular:

in the case of ZnO-7, a mixture of ZnO and $Zn_5(OH)_8(NO_3)_2.2H_2O$;
in the case of ZnO-8, a mixture of ZnO and $Zn_5(OH)_8(NO_3)_2 \cdot 2H_2O$, wherein the relative amount of ZnO in the mixture is higher than in the sample ZnO-7;
and in the case of ZnO-9, a mixture of ZnO and $Zn_5(OH)_8(NO_3)_2 \cdot 2H_2O$, wherein the relative amount of ZnO in the mixture is higher than in the sample ZnO-7:
said compounds presenting different percentages of ZnO and said intermediate compounds having general formula (I). From such results it is possible to observe how, by increasing the temperature of the heat treatment, zinc hydroxy-nitrate (RT) is gradually transformed into zinc oxide (> 180 °C for 20 hours of treatment), passing through intermediate mixtures in the case of samples ZnO-07, Zn-08, Zn-09, or samples in which the heat treatment was carried out at a temperature of 90 °C, 120 °C and 150 °C for 20 hours, respectively. However, in the case of the diffractogram of compound ZnO-01 it is possible to note, in addition to the characteristic peak of zinc oxide, also a further peak, characteristic of an intermediate zinc hydroxylate compound (zinc hydroxy-nitrate) having the formula: $Zn_3(OH)_4(NO_3)_2$ (see Figure 1). Such a result indicates that the heat treatment of such a compound resulted in a zinc-based compound according to the present invention, i.e., comprising ZnO and an intermediate compound of general formula (I). In this case it may be hypothesized that the initially set heat-treatment conditions (180 °C for 20 hours) were actually carried out at a lower temperature or for a shorter period of time so as to avoid the complete transformation into ZnO (as instead occurred in the case of the other samples, see for example ZnO-10). The Applicants have found that the use of a zinc-based compound comprising ZnO and a compound having general formula (I) such as that of the present invention and synthesized in accordance with the process described above instead of a commercial ZnO (or obtained according to a different process) allows to obtain a zinc dicarboxylate catalyst with a higher heterogeneous catalytic copolymerization reaction activity of a polyalkylene carbonate starting from $CO_2$ and an epoxide. Without wishing to be bound by a specific theory, it is in fact possible to argue that the commercial ZnO (or obtained according to a different procedure) is resistant to the complete formation of the zinc dicarboxylate catalyst, thus resulting in a partially incomplete or in any case more difficult reaction with respect to that of the present invention.

Example 2 - preparation of the zinc glutarate catalyst according to the present invention

Several zinc glutarate catalyst samples were prepared using the different zinc-based compounds synthesized as in Example 1, according to the following steps and reaction diagram:

Diagram 1

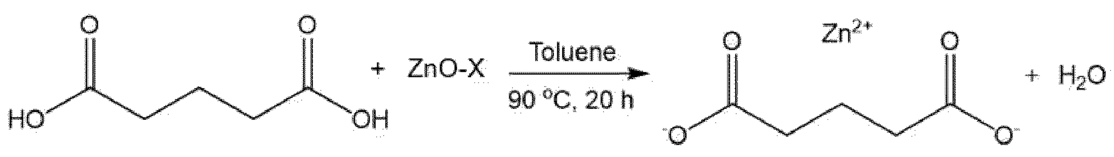


Glutaric acid

Zinc glutarate (ZnGA)

The zinc-based compound (ZnO-X, 2.0 g) and glutaric acid (3.26 g) were added in a glass flask. Subsequently toluene (150 mL) was added as the reaction solvent. The flask was then connected to a condenser and heated at 90 °C under stirring (600 rpm) for 24 hours until a suspension comprising a white precipitate was obtained. Said suspension was then allowed to cool to room temperature and the white precipitate was filtered, washed with ethanol (500 mL) and dried at 120 °C overnight. In some cases, the reaction was performed under supercritical $CO_2$ conditions (in a stainless steel autoclave). Each zinc glutarate catalyst sample obtained was classified as follows (Table 2).

**Table 2**

| ZnGA-X | Reagents | Temperature (°C) | Time (hours) | Solvent |
|---|---|---|---|---|
| ZnGA-03 | ZnO-01 + glutaric acid | 90 | 20 | Toluene |
| ZnGA-04 | ZnO-01 + glutaric acid | 90 | 20 | Toluene & supercritical $CO_2$ |
| ZnGA-07 | ZnO-02 + glutaric acid | 110 | 72 | Toluene |
| ZnGA-09 | ZnO-04 + glutaric acid | 90 | 24 | Toluene |
| ZnGA-11 | ZnO-06 + glutaric acid | 90 | 24 | Toluene |
| ZnGA-12 | ZnO-07 + glutaric acid | 90 | 24 | Toluene |
| ZnGA-13 | ZnO-08 + glutaric acid | 90 | 24 | Toluene |
| ZnGA-14 | ZnO-09 + glutaric acid | 90 | 24 | Toluene |
| ZnGA-15 | ZnO-10 + glutaric acid | 90 | 24 | Toluene |

Example 3 - preparation of zinc succinate (ZnSA), adipate (ZnAA), zinc terephthalate (ZnTPA) and zinc fumarate (ZnFA) catalysts according to the present invention

With the ZnO-X samples prepared according to Example 1, and following the synthesis reported for ZnGA in Example 2 (appropriately adapting the dicarboxylic acid used for each catalyst: adipic acid, terephthalic acid and fumaric acid, respectively), Zinc adipate (ZnAA), zinc terephthalate (ZnTPA) and zinc fumarate (ZnFA) catalysts were also synthesised. For the ZnAA catalyst, a higher reaction temperature and a longer reaction time were necessary in order to promote the complete conversion of ZnO with adipic acid. Each sample obtained was classified as follows (Table 3).

**Table 3**

| Catalyst | Reagents | Temperature (°C) | Time (hours) | Solvent |
|---|---|---|---|---|
| ZnSA-01 | ZnO-01 + succinic acid | 90 | 20 | toluene |
| ZnAA-01 | ZnO-01 + adipic acid | 90 | 20 | toluene |
| ZnAA-02 | ZnO-01 + adipic acid | 110 | 72 | toluene |
| ZnTPA-01 | ZnO-04 + teraphthalic acid | 90 | 24 | toluene |
| ZnTPA-03 | ZnO-9 + teraphthalic acid | 90 | 24 | toluene |
| ZnFA-01 | ZnO-9 + fumaric acid | 90 | 24 | toluene |

Example 4 - Catalytic tests: synthesis of polypropylene carbonate PPC

The catalysts obtained as described in Examples 2 and 3 were then tested in the copolymerization reaction, in heterogeneous phase, of polypropylene carbonate according to the following reaction diagram:

Diagram 2

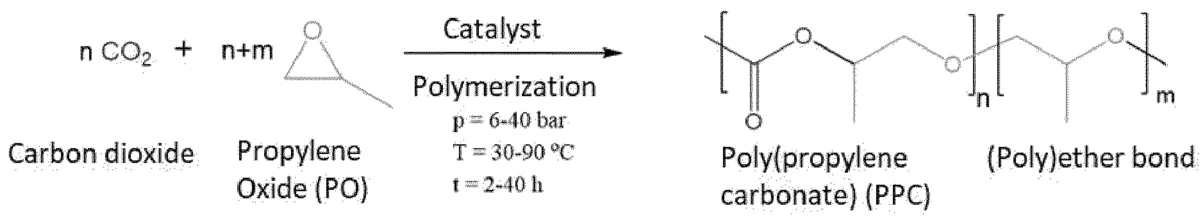


The zinc glutarate and zinc adipate catalysts showed the best catalytic activity in PPC synthesis. The highest productivity was recorded with the catalysts ZnGA-12, ZnGA-13 and ZnGA-14, or the catalysts obtained respectively with zinc-based compounds ZnO-07, ZnO-08 and ZnO-09, or zinc-based compounds subjected to a heat treatment at 90°, 120° and 150 ° C for 20 hours. Among these, the best catalyst was ZnGA-12 whose productivity was further increased by

using it together with the propylene oxide subject to a dehydration pretreatment. In order to compare the results obtained with the catalysts of the present invention, other types of glutarates with various different metal ions (MgGA, $Al_2GA_3$, $TiGA_2$, $Fe_2GA_3$, CuGA) were also tested as catalysts. All of these catalysts showed almost no catalytic activity, suggesting that it is the zinc ion which plays the key role of active site for such a type of reaction. The zinc glutarate catalysts ZnGA-07, ZnGA-09 and ZnGA-15 (i.e., respectively obtained with the zinc-based compounds ZnO-02, ZnO-03, ZnO-04 and ZnGA-10 subjected to heat treatment at 180 °C or 250 °C for 20 hours), and zinc glutarate catalyst ZnGA-11 (i.e., obtained with the zinc-based compound ZnO-06, i.e., a zinc-based compound not subjected to heat treatment [RT]) showed no catalytic activity. With regard to the zinc dicarboxylate catalysts with different dicarboxylates (adipate, succinate, fumarate and terephthalate), ZnAA and ZnSA showed some activity. The specific conditions of synthesis and the results obtained for each sample are summarized in Table 4 below.

**Table 4**

| Catalysts | Temperature °C | Time (hours) | CO2 pressure | PPC yield (g/gcat.) | Productivity (g/gcat*hour) | PPC |
|---|---|---|---|---|---|---|
| ZnGA-03 | 80 | 20 | 40 | 30.0 | 1.50 | PPC-5 (15.0 |
| | | | | | | g) |
| ZnGA-04 | 80 | 20 | 40 | 31.0 | 1.55 | PPC-6 (15.5 g) |
| ZnSA-01 | 80 | 20 | 40 | 7.2 | 0.36 | PPC-9 (3.6 g) |
| ZnAA-02 | 80 | 20 | 40 | 46.0 | 2.30 | PPC-10 (23.0 g) |
| CuGA | 80 | 20 | 40 | < 1 | < 0.05 | - |
| $Fe_2GA_3$ | 80 | 20 | 40 | < 1 | < 0.05 | - |
| $TiGA_2$ | 80 | 20 | 40 | < 1 | < 0.05 | - |
| $Al_2GA_3$ | 80 | 20 | 40 | < 1 | < 0.05 | - |
| MgGA | 80 | 20 | 40 | < 1 | < 0.05 | - |
| ZnGA-3+ZnAA-2 | 80 | 20 | 40 | 29.0 | 1.45 | PPC-11 (14.5 g) |
| ZnGA-07 | 80 | 20 | 40 | < 1 | < 0.05 | - |
| ZnGA-09 | 80 | 20 | 40 | < 1 | < 0.05 | - |
| ZnGA-11 | 80 | 20 | 40 | < 1 | < 0.05 | - |
| ZnGA-12 | 80 | 20 | 40 | 28.7 | 1.44 | PPC-12 |
| ZnGA-13 | 80 | 20 | 40 | 12.4 | 0.62 | PPC-13 |
| ZnGA-14 | 80 | 20 | 40 | 18.7 | 0.94 | PPC-14 |
| ZnGA-15 | 80 | 20 | 40 | 7.6 | 0.38 | PPC-15 |
| ZnTPA-1 | 80 | 20 | 40 | < 1 | < 0.05 | - |
| ZnTPA-3 | 80 | 20 | 40 | < 1 | < 0.05 | - |
| ZnFA-1 | 80 | 20 | 40 | < 1 | < 0.05 | - |
| ZnAA- | 80 | 20 | 40 | 8.6 | 0.43 | PPC- |
| 02* | | | | | | 10-2b-3b |
| ZnAA-02* | 80 | 20 | 40 | 8.6 | 0.43 | PPC-10-2b-3b |
| ZnAA-02* | 80 | 20 | 40 | 6.4 | 0.32 | PPC-10-4b (3.2 g) |
| ZnGA-12** | 80 | 20 | 40 | 56.2 | 2.8 | PPC-12-2b (28.1 g) |
| ZnGA-12** | 80 | 20 | 40 | 43.6 | 2.2 | PPC-12-3b (21.8 g) |
| Reaction conditions: catalyst amount, 0.5 g; PO volume, 50 mL; mechanical stirring rate, 300 rpm. *These two PPC samples were mixed to form a single sample PPC-10-2b-3b. **PO was dried by 5A molecular sieve for > 24 hours. | | | | | | |

Example 5 - Chemical-physical analysis

The PPCs obtained as described in Example 4 were characterized in order to assess the molecular characteristics, selectivity and percentage of ether bonds thereof (Table 5). The weighted average molecular weight ($M_w$) and the number average molecular weight ($M_n$) were determined by gel permeation chromatography (GPC) (Erma Inc. chromatograph) and Shodex KF columns. The calibration curve was obtained with 16 narrowly distributed polystyrene standards (Polymer Laboratories) with molar masses ranging from 3.18 x 106 to 162 g/mol. The percentage of polypropylene carbonate (PPC) with respect to cyclic propylene carbonate (CPC) and the percentage of ether units with respect to polycarbonate units were determined by $^1$H-NMR spectrometry (see for example Figure 4).

**Table 5**

| PPC | Selectivity in solid material obtained (%) | | Ether bond (%) | $M_w$ | $M_n$ |
|---|---|---|---|---|---|
| | PPC | CPC | | | |
| PPC-5 | 98.3 | 1.7 | 7.9 | 216k | 35.6k |
| PPC-6 | 98.5 | 1.5 | 7.8 | 124k | 18.6k |
| PPC-10 | 96.5 | 3.5 | 6.9 | 116k | 33.7k |
| PPC-11 | - | - | - | - | - |
| PPC-12 | 97.9 | 2.1 | 9.2 | 109k | 9.7k |
| PPC-13 | 98.7 | 1.3 | 9.0 | 186k | 8.6k |
| PPC-14 | 98.1 | 1.9 | 7.1 | 104k | 16k |
| PPC-15 | 98.2 | 1.8 | 5.2 | 58k | 6k |
| PPC-10-4b | 98.4 | 1.6 | 3.4 | 14k | 11k |
| PPC-12-3b | 98.8 | 1.2 | 8.9 | 76k | 2k |

Example 6: Thermo-mechanical characterization

The thermal properties of the PPCs prepared according to Example 4 were evaluated by Differential Scanning Calorimeter (DSC) (DSC Q100, TA Instruments, New Castle, DE, USA) by performing three successive heating and cooling scans and further heating. Calorimetric properties were evaluated in the third scan. It was observed that all the polymers obtained by the process according to the present invention are amorphous. No transition indicative of the presence of crystalline phase or recrystallization of the material was found in any sample. For all the samples, a single glass transition temperature ($T_g$) was highlighted at values comprised between -5 and 30°C. The thermal stability of the PPCs was evaluated in air by thermogravimetry (TGA) (TGA Q500, TA Instruments, New Castle, DE, USA) using high-resolution dynamic method. It was observed that the degradation of the PPCs starts significantly only at temperatures above 200-210 °C, so there is no impediment to the transformation and forming thereof with the methods usually used for polymers and plastics. By way of example, the samples PPC-5, PPC-6 and PPC-10 were subjected to compression moulding (Collin P200E, Maitenbeth Germany) by means of a press with a special time/temperature/pressure programme (3 min/180 °C/30 atm) in order to obtain thin films. All the films have homogeneity, good to excellent transparency and thicknesses varying from about 100 to 250 μm (as shown for example in Figure 6). The films were then cut to obtain specimens for the mechanical tests. The uniaxial tensile test was carried out with an electromechanical dynamometer (Instron model 3366). The Elastic Modulus (E), yield strength ($\delta y$), elongation at break ($\varepsilon_b$) and the load corresponding to 900% elongation ($\delta_{900\%}$) were evaluated on specimens 0.2 mm thick, 10 mm wide and with 80 mm useful length at a speed of 200 mm/min. Furthermore, the specimens were mounted on a paper frame to facilitate gripping at the traction machine.

From such tests it was possible to observe that, if stressed in traction, the samples stretch by more than 900% (beyond the measurement limits of the machine used) but do not break, and for this reason the load corresponding to 900% elongation was calculated for each sample instead of the ultimate tensile strength. The results are shown in the following table (Table 6).

**Table 6**

| Sample | E (Mpa) | $\delta y$ (Mpa) | $\varepsilon_b$ (%) | $\delta_{900\%}$ (Mpa) |
|---|---|---|---|---|
| PPC-5 | 139±34 | 0.85±0.11 | > 910 | 2.91±0.18 |

(continued)

| Sample | E (Mpa) | δy (Mpa) | $\varepsilon_b$ (%) | $\delta_{900\%}$ (Mpa) |
|---|---|---|---|---|
| PPC-6 | 121±31 | 0.72±0.09 | > 910 | 2.28±0.17 |
| PPC-10 | 128±35 | 1.1 ±0.01 | > 910 | 3.03±0.08 |

Furthermore, when compared with known polymers, as can be seen in Figure 8, the mechanical properties of the polypropylene carbonates according to the present disclosure are comparable to those of the softer, more flexible polymers of petrochemical origin, and their extensibility can reach values not achievable by other known polymers in the present state of the art.

Example 7: Extensibility and Mechanical Return of PPC Films

The materials were also subjected to uniaxial tensile testing using an electromechanical dynamometer (Instron Model 3366) to evaluate of extensibility and mechanical return characteristics.

The films obtained by compression as previously described were cut to obtain specimens of thickness 0.2 mm, width 10 mm and useful length equal to 80 mm which were then mounted on a paper frame to facilitate gripping at the tensile machine. The tensile test was performed at a speed of 200 mm/min.

The specimens were subjected to an elongation of 920% (about 73 cm) without reaching breakage and were then released from the traction machine and it was possible to verify an immediate and almost complete recovery of the original size. From the initial and final length, the strain recovery was thus estimated according to the following formula:

$$[L_i - (L_f - L_i)] \cdot 100/L_i$$

Wherein Li is the initial length of the specimen (before the elongation test) and $L_f$ is the length following elongation and release. As shown in the following table (Table 7), the samples have a strain recovery between 80% and over 90%.

**Table 7**

| Sample | Specimen length before test ($L_i$) | Specimen length after test ($L_f$) | Strain recovery (%) |
|---|---|---|---|
| PPC5 | 8 | 8.65 | 92 |
| PPC6 | 8 | 9.2 | 85 |
| PPC10 | 8 | 9.0 | 87.5 |

Example 8: Self-healing of PPC films and evaluation of the time required for complete self-healing

The samples were also subjected to mechanical tests of uniaxial traction after physical-mechanical damage had been done on them in order to evaluate the self-healing capacity of the materials. In a first set of tests, the specimens of sample PPC-6 were cut transversely and the two pieces thus obtained were placed, on a sheet of graph paper, by simply overlapping (without compressing and/or without heating) the central part of about 4 mm (Figure 7) and get a single specimen. The uniaxial tensile test was then carried out on these samples after 4 days and after having exactly evaluated the length of the overlap with an optical microscope. The elastic modulus (E, Mpa), yield strength ($\delta_y$, MPa), ultimate tensile strength ($\delta_b$, MPa) and elongation at break ($\varepsilon_b$, %) were then calculated for each specimen obtained from sample PPC-6. The cut previously made was no longer visible, the specimens were completely repaired, and, after the uniaxial tensile test, no failure was observed in the area corresponding to the self-healing. The mechanical properties measured after self-healing are comparable to those of the original specimens.

The results are shown in the following table (Table 8).

**Table 8**

| Specimen | E (MPa) | δy (MPa) | $\varepsilon_b$ (%) | $\delta_b$ (MPa) |
|---|---|---|---|---|
| specimen 0 | 251.8 | 2.86 | 617.3 | 4.37 |
| specimen 1 | 415.7 | 2.38 | 684.0 | 3.52 |
| specimen 2 | 455.2 | 2.53 | 830.2 | 4.10 |

(continued)

| Specimen | E (MPa) | $\delta y$ (MPa) | $\varepsilon_b$ (%) | $\delta_b$ (MPa) |
|---|---|---|---|---|
| specimen 3 | 335.6 | 2.26 | 795.0 | 4.05 |
| specimen 4 | 316.8 | 2.02 | 838.2 | 3.88 |
| specimen 5 | 312.0 | 1.77 | 732.6 | 2.93 |
| specimen 6 | 360.2 | 1.99 | 577.8 | 2.59 |
| specimen 7 | 236.1 | 1.33 | 847.2 | 3.30 |

Despite slight fluctuations due to the different degree of overlap, the results confirm that films printed with the polypropylene carbonate according to the present disclosure have excellent self-healing capabilities.

A second set of experiments was developed to evaluate the effectiveness of the self-healing mechanism and the minimum time required to achieve complete self-healing. These experiments were conducted according to two mechanical characterization methods:

- method of adhesion evaluation on overlapping flaps ("lap shear joints"): two strips of material with a width of 10 mm and a length of about 40 mm were overlapped one on the other for a length equal to 5 mm to constitute a single strip with a length of about 75 mm and the same width and thickness of the starting strips; the strip thus obtained was then subjected to a tensile test with an electromechanical dynamometer to evaluate the effectiveness of the welding;
- method of assessing adhesion by delamination: two strips of material 10 mm wide and about 80 mm long were overlapped one on top of the other for a length of 40 mm to make up a specimen, half of which was made up of the overlapping portions, and half of which was made up of the non-overlapping flaps, to be subjected to delamination tests with an electromechanical dynamometer and assess the effectiveness of welding.

The overlapping of the two areas was performed at room temperature and without exerting significant pressure on the two flaps, other than gentle manual pressure to promote good contact between the overlapping surfaces. Both test methods were performed using an electromechanical dynamometer (Instron, Mod. 3366), operating at room temperature and at a speed of 50 mm/min.

In order to verify the minimum time needed to have an effective weld, the tests were conducted at various times, varying between 10 minutes and a week, after the overlap of the two flaps ("welding time"). The results obtained are briefly reported in Table 9 and showed two failure modes:

- for "short" times, varying from a few minutes to 2 to 3 hours, the material shows an adhesive-type failure that occurs in the welded area by disconnection of the two flaps from each other;
- for longer times, more than 2/3 hours, the material shows a cohesive type of breakage, which occurs in the areas outside the welded area and confirms the effective self-welding of the two flaps.

In fact, the self-repair mechanism occurs according to a two-stage process: in a first stage, taking advantage of a moderate "tackyness" of the material, the two flaps simply keep adhering to each other; in a second stage, which both tests have shown to occur for times longer than 2/3 hours, the two flaps interpenetrate and self-weld.

**Table 9**

| Welding time | "lap shear joints" method | Delamination method |
|---|---|---|
| 10 minutes | Adhesive failure, inside the welded zone | Adhesive failure, inside the welded zone |
| 30 minutes | Adhesive failure, inside the welded zone | Adhesive failure, inside the welded zone |
| 1 hour | Adhesive failure, inside the welded zone | Adhesive failure, inside the welded zone |
| 2 hours | Cohesive failure, external to the welded zone | Cohesive failure, external to the welded zone |
| 1 day | Cohesive failure, external to the welded zone | Cohesive failure, external to the welded zone |
| 4 days | Cohesive failure, external to the welded zone | Cohesive failure, external to the welded zone |
| 1 week | Cohesive failure, external to the welded zone | Cohesive failure, external to the welded zone |

## Claims

1. A process for the synthesis of a zinc dicarboxylate catalyst, comprising the steps of:

   (a) providing a solution of a zinc precursor having the general formula $Zn(L)_2 \cdot nH_2O$, wherein n is comprised between 0 and 20, L is selected in the group consisting of: $NO_3$, $CH_3CO_2$, $(SO_4)_{0,5}$, halide, and acetyl acetonate (AcAc);
   (b) adding a solution of a base to said solution of a zinc precursor, thereby obtaining a precipitate;
   (c) separating the precipitate from the supernatant solution and subjecting the solid thus obtained to a heat treatment thereby obtaining a zinc-based compound comprising a mixture of ZnO and a compound having the general formula (I):

   $Zn_x(OH)_y(L)_z \cdot nH_2O$ Formula (I)

   wherein L is as defined in step (a),

   $$2x = y + z;$$

   wherein

   x is comprised between 1 and 5,
   y is comprised between 1 and 8,
   z is comprised between 1 and 2, and
   n is comprised between 0 and 20;
   wherein said heat treatment is carried out

   - at a temperature (T): 30 °C < T < 90 °C and for a period of time (t): 20 hours < t ≤ 60 hours; or
   - at a temperature (T): 90 °C ≤ T ≤ 150 °C and for a period of time (t): 20 minutes ≤ t ≤ 20 hours; or
   - at a temperature (T): 150 °C < T ≤ 400 °C and for a period of time (t): 20 minutes ≤ t ≤ 15 hours;

   (d) reacting said zinc-based compound with a saturated aliphatic dicarboxylic acid.

2. A process for the synthesis of a zinc-based compound comprising a mixture of ZnO and a compound having the general formula (I):

   $Zn_x(OH)_y(L)_z \cdot nH_2O$ Formula (I)

   wherein L is selected in the group consisting of: $NO_3$, $CH_3CO_2$, $(SO_4)_{0,5}$, halide, and acetyl acetonate (AcAc),

   $$2x = y + z;$$

   wherein

   x is comprised between 1 and 5,
   y is comprised between 1 and 8,
   z is comprised between 1 and 2, and
   n is comprised between 0 and 20,
   said process comprising the steps of:

   (a) providing a solution of a zinc precursor having the general formula $Zn(L)_2 \cdot nH_2O$, wherein n and L are as defined above;
   (b) adding a solution of a base to said solution of a zinc precursor, thereby obtaining a precipitate;
   (c) separating the precipitate from the supernatant solution and subjecting the solid thus separated to a heat treatment:

   - at a temperature (T): 30 °C < T < 90 °C and for a period of time (t): 20 hours < t ≤ 60 hours; or
   - at a temperature (T): 90 °C ≤ T ≤ 150 °C and for a period of time (t): 20 minutes ≤ t ≤ 20 hours; or

- at a temperature (T): 150 °C < T ≤ 400 °C and for a period of time (t): 20 minutes ≤ t ≤ 15 hours

**3.** The process according to claim 1 or according to claim 2, wherein said mixture comprises said ZnO and said compound having the general formula (I) in a mass ratio comprised between 0.1 and 10, preferably comprised between 0.2 and 5.

**4.** The process according to claims 1 or 3 for the synthesis of a zinc dicarboxylate catalyst selected in the group consisting of: zinc glutarate, zinc adipate, zinc succinate, wherein the dicarboxylic acid of step (d) is selected from among glutaric acid, adipic acid, succinic acid.

**5.** A zinc-based compound comprising ZnO and a compound having the general formula (I), obtainable by the process according to any one of claims 2-4.

**6.** A zinc dicarboxylate catalyst obtainable by the process according to any one of claims 1 and 3-4.

**7.** A process for the synthesis of polyalkylene carbonate by means of a heterogeneous catalytic copolymerization reaction comprising the steps of:
(e) reacting carbon dioxide with an alkyl epoxide containing at least 3 atoms of carbon, preferably in the absence of an organic solvent, in the presence of the zinc dicarboxylate catalyst according to claim 6.

**8.** The process according to claim 7, wherein said step (e) is carried out by heating at a temperature comprised between 30 and 150 °C, preferably at a pressure ($P_{CO2}$) comprised between 1 and 80 bar and, more preferably, for a period of time comprised between 1 and 40 hours.

**9.** The process for the synthesis of polyalkylene carbonate according to claim 7 or 8, wherein said polyalkylene carbonate is polypropylene carbonate (PPC) and wherein the alkyl epoxide of step (e) is propylene oxide (PO).

## Patentansprüche

**1.** Verfahren zur Synthese eines Zinkdicarboxylat-Katalysators, umfassend die Schritte:

(a) Bereitstellen einer Lösung eines Zinkvorläufers mit der allgemeinen Formel $Zn(L)_2 \cdot nH_2O$, wobei n zwischen 0 und 20 liegt, L ausgewählt ist aus der Gruppe bestehend aus: $NO_3$, $CH_3CO_2$, $(SO_4)_{0,5}$, Halogenid und Acetylacetonat (AcAc);
(b) Zugeben einer Lösung einer Base zu der Lösung eines Zinkvorläufers, wodurch ein Niederschlag erhalten wird;
(c) Abtrennen des Niederschlags von der überstehenden Lösung und Unterziehen des so erhaltenen Feststoffs einer Wärmebehandlung, wodurch eine Verbindung auf Zinkbasis erhalten wird, die eine Mischung aus ZnO und einer Verbindung mit der allgemeinen Formel (I) umfasst:

$$Zn_x(OH)_y(L)_z \cdot nH_2O \qquad \text{Formel (I)}$$

wobei L wie in Schritt (a) definiert ist,

$$2x = y + z;$$

wobei

x zwischen 1 und 5 liegt,
y zwischen 1 und 8 liegt,
z zwischen 1 und 2 liegt und
n zwischen 0 und 20 liegt;
wobei die Wärmebehandlung durchgeführt wird

- bei einer Temperatur (T): 30 °C < T < 90 °C und für einen Zeitraum (t): 20 Stunden < t ≤ 60 Stunden; oder
- bei einer Temperatur (T): 90 °C ≤ T ≤ 150 °C und für einen Zeitraum (t): 20 Minuten ≤ t ≤ 20 Stunden; oder
- bei einer Temperatur (T): 150 °C < T ≤ 400 °C und für einen Zeitraum (t): 20 Minuten ≤ t ≤ 15 Stunden;

(d) Umsetzen der Verbindung auf Zinkbasis mit einer gesättigten aliphatischen Dicarbonsäure.

**2.** Verfahren zur Synthese einer Verbindung auf Zinkbasis, umfassend eine Mischung aus ZnO und einer Verbindung mit der allgemeinen Formel (I):

$Zn_x(OH)_y(L)_z \cdot nH_2O$ Formel (I)

wobei L ausgewählt ist aus der Gruppe bestehend aus: $NO_3$, $CH_3CO_2$, $(SO_4)_{0,5}$, Halogenid und Acetylacetonat (AcAc),

$$2x = y + z;$$

wobei

x zwischen 1 und 5 liegt,
y zwischen 1 und 8 liegt,
z zwischen 1 und 2 liegt und
n zwischen 0 und 20 liegt,
wobei das Verfahren die folgenden Schritte umfasst:

(a) Bereitstellen einer Lösung eines Zinkvorläufers mit der allgemeinen Formel $Zn(L)_2nH_2O$, wobei n und L wie oben definiert sind;
(b) Zugeben einer Lösung einer Base zu der Lösung eines Zinkvorläufers, wodurch ein Niederschlag erhalten wird;
(c) Abtrennen des Niederschlags von der überstehenden Lösung und Unterziehen des so abgetrennten Feststoffs einer Wärmebehandlung:

- bei einer Temperatur (T): 30 °C < T < 90 °C und für einen Zeitraum (t): 20 Stunden < t ≤ 60 Stunden; oder
- bei einer Temperatur (T): 90 °C ≤ T ≤ 150 °C und für einen Zeitraum (t): 20 Minuten ≤ t ≤ 20 Stunden; oder
- bei einer Temperatur (T): 150 °C < T ≤ 400 °C und für einen Zeitraum (t): 20 Minuten ≤ t ≤ 15 Stunden.

**3.** Verfahren nach Anspruch 1 oder nach Anspruch 2, wobei die Mischung das ZnO und die Verbindung mit der allgemeinen Formel (I) in einem Massenverhältnis zwischen 0,1 und 10, vorzugsweise zwischen 0,2 und 5, umfasst.

**4.** Verfahren nach den Ansprüchen 1 oder 3 zur Synthese eines Zinkdicarboxylat-Katalysators, ausgewählt aus der Gruppe bestehend aus: Zinkglutarat, Zinkadipat, Zinksuccinat, wobei die Dicarbonsäure von Schritt (d) aus Glutarsäure, Adipinsäure, Bernsteinsäure ausgewählt ist.

**5.** Verbindung auf Zinkbasis, umfassend ZnO und eine Verbindung mit der allgemeinen Formel (I), erhältlich durch das Verfahren nach einem der Ansprüche 2-4.

**6.** Zinkdicarboxylat-Katalysator, erhältlich durch das Verfahren nach einem der Ansprüche 1 und 3-4.

**7.** Verfahren zur Synthese von Polyalkylencarbonat mittels einer heterogenen katalytischen Copolymerisationsreaktion, umfassend die Schritte:
(e) Umsetzung von Kohlendioxid mit einem Alkylepoxid, enthaltend mindestens 3 Kohlenstoffatomen, vorzugsweise in Abwesenheit eines organischen Lösungsmittels, in Gegenwart des Zinkdicarboxylat-Katalysators nach Anspruch 6.

**8.** Verfahren nach Anspruch 7, wobei der Schritt (e) durch Erhitzen auf eine Temperatur zwischen 30 und 150 °C, vorzugsweise auf einen Druck ($P_{CO2}$) zwischen 1 und 80 bar und noch bevorzugter für einen Zeitraum zwischen 1 und 40 Stunden durchgeführt wird.

**9.** Verfahren zur Synthese von Polyalkylencarbonat nach Anspruch 7 oder 8, wobei das Polyalkylencarbonat Polypropylencarbonat (PPC) ist und wobei das Alkylepoxid von Schritt (e) Propylenoxid (PO) ist.

## Revendications

1. Procédé de synthèse d'un catalyseur de dicarboxylate de zinc, comprenant les étapes suivantes :

   (a) prévoir une solution d'un précurseur de zinc de formule générale $Zn(L)_2 \cdot nH_2O$, où n est compris entre 0 et 20, L est choisi dans le groupe constitué par : $NO_3$, $CH_3CO_2$, $(SO_4)_{0,5}$, halogénure et acétylacétonate (AcAc) ;
   (b) ajouter une solution d'une base à ladite solution d'un précurseur de zinc, ce qui permet d'obtenir un précipité ;
   (c) séparer le précipité de la solution surnageante et soumettre le solide ainsi obtenu à un traitement thermique afin d'obtenir un composé à base de zinc comprenant un mélange de ZnO et un composé de formule générale (I) :

   $Zn_x(OH)_y(L)_z \cdot nH_2O$ Formule (I)

   où L est tel que défini à l'étape (a),

   $$2x = y + z ;$$

   où

   x est compris entre 1 et 5,
   y est compris entre 1 et 8,
   z est compris entre 1 et 2, et
   n est compris entre 0 et 20 ;
   dans lequel ledit traitement thermique est effectué

   - à une température (T) : 30 °C < T < 90 °C et pendant une durée (t) : 20 heures < t ≤ 60 heures ; ou
   - à une température (T) : 90 °C ≤ T ≤ 150 °C et pendant une durée (t) : 20 minutes ≤ t ≤ 20 heures ; ou
   - à une température (T) : 150 °C < T ≤ 400 °C et pendant une durée (t) : 20 minutes ≤ t ≤ 15 heures ;

   (d) faire réagir ledit composé à base de zinc avec un acide dicarboxylique aliphatique saturé.

2. Procédé de synthèse d'un composé à base de zinc comprenant un mélange de ZnO et d'un composé de formule générale (I) :

   $Zn_x(OH)_y(L)_z \cdot nH_2O$ Formule (I)

   où L est choisi dans le groupe constitué par : $NO_3$, $CH_3CO_2$, $(SO_4)_{0,5}$, halogénure et acétylacétonate (AcAc),

   $$2x = y + z ;$$

   où

   x est compris entre 1 et 5,
   y est compris entre 1 et 8,
   z est compris entre 1 et 2, et
   n est compris entre 0 et 20,
   ledit procédé comprenant les étapes de :

   (a) prévoir une solution d'un précurseur de zinc de formule générale $Zn(L)_2 \cdot nH_2O$, où n et L sont tels que définis ci-dessus ;
   (b) ajouter une solution d'une base à ladite solution d'un précurseur de zinc, ce qui permet d'obtenir un précipité ;
   (c) séparer le précipité de la solution surnageante et soumettre le solide ainsi séparé à un traitement thermique :

   - à une température (T) : 30 °C < T < 90 °C et pendant une durée (t) : 20 heures < t ≤ 60 heures ; ou
   - à une température (T) : 90 °C ≤ T ≤ 150 °C et pendant une durée (t) : 20 minutes ≤ t ≤ 20 heures ; ou
   - à une température (T) : 150 °C < T ≤ 400 °C et pendant une durée (t) : 20 minutes ≤ t ≤ 15 heures.

**3.** Procédé selon la revendication 1 ou selon la revendication 2, dans lequel ledit mélange comprend ledit ZnO et ledit composé de formule générale (I) dans un rapport massique compris entre 0,1 et 10, de préférence compris entre 0,2 et 5.

**4.** Procédé selon les revendications 1 ou 3 de synthèse d'un catalyseur de dicarboxylate de zinc choisi dans le groupe constitué par : glutarate de zinc, adipate de zinc, succinate de zinc, dans lequel l'acide dicarboxylique de l'étape (d) est choisi parmi l'acide glutarique, l'acide adipique, l'acide succinique.

**5.** Composé à base de zinc comprenant du ZnO et un composé de formule générale (I), pouvant être obtenu par le procédé selon l'une quelconque des revendications 2-4.

**6.** Catalyseur de dicarboxylate de zinc pouvant être obtenu par le procédé selon l'une quelconque des revendications 1 et 3-4.

**7.** Procédé de synthèse de polycarbonate d'alkylène au moyen d'une réaction de copolymérisation catalytique hétérogène, comprenant les étapes suivantes :
(e) faire réagir du dioxyde de carbone avec un époxyde d'alkyle contenant au moins 3 atomes de carbone, de préférence en l'absence d'un solvant organique, en présence du catalyseur de dicarboxylate de zinc selon la revendication 6.

**8.** Procédé selon la revendication 7, dans lequel ladite étape (e) est réalisée par chauffage à une température comprise entre 30 et 150 °C, de préférence à une pression ($P_{CO2}$) comprise entre 1 et 80 bars et, plus préférablement, pendant une durée comprise entre 1 et 40 heures.

**9.** Procédé de synthèse de carbonate de polyalkylène selon la revendication 7 ou 8, dans lequel ledit carbonate de polyalkylène est du carbonate de polypropylène (PPC) et dans lequel l'époxyde d'alkyle de l'étape (e) est de l'oxyde de propylène (PO).

Fig.1

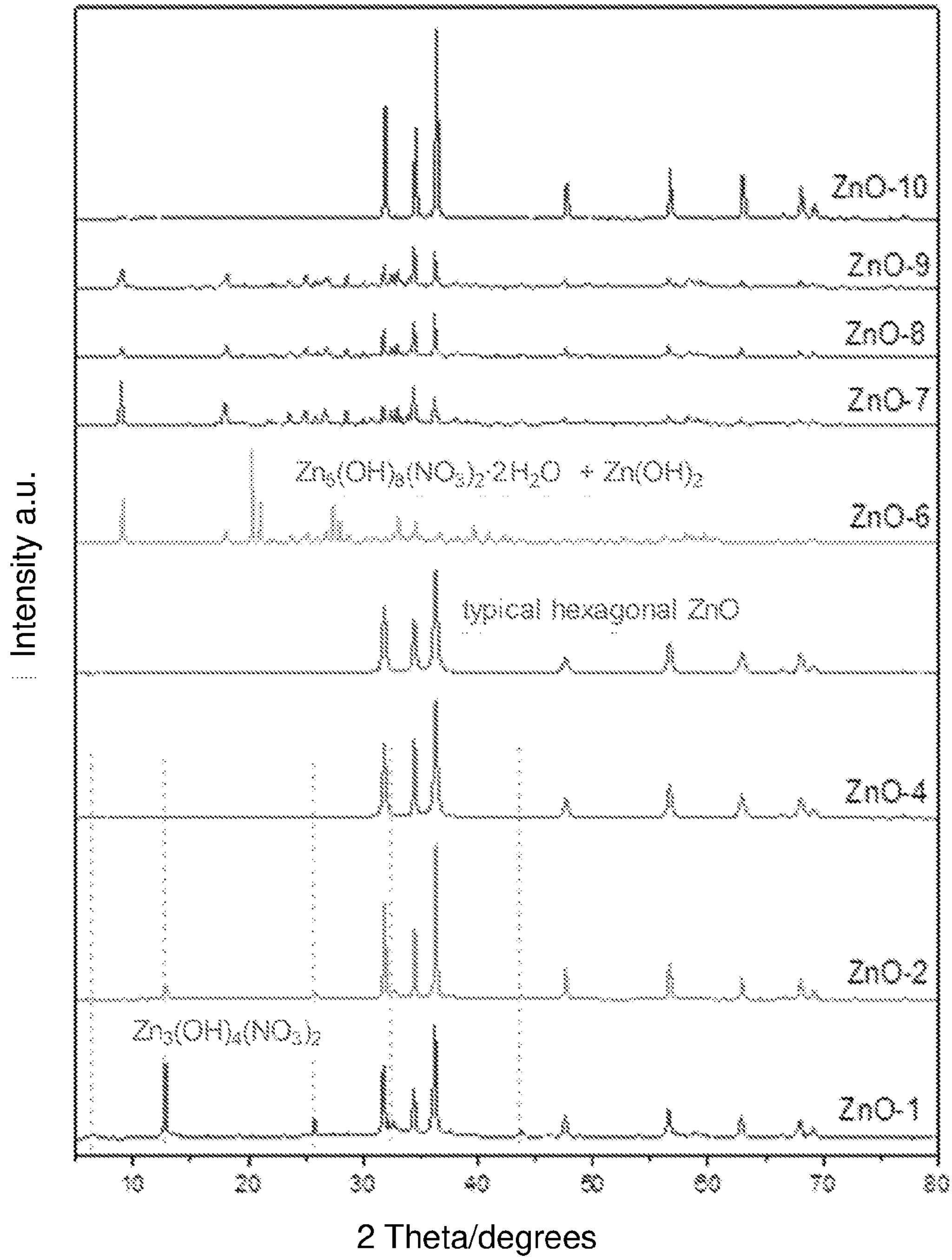
ZnO-10
ZnO-9
ZnO-8
ZnO-7
$Zn_5(OH)_8(NO_3)_2 \cdot 2H_2O$ + $Zn(OH)_2$
ZnO-6
typical hexagonal ZnO
ZnO-4
ZnO-2
$Zn_3(OH)_4(NO_3)_2$
ZnO-1
Intensity a.u.
10
20
30
40
50
60
70
80
2 Theta/degrees

Fig.2

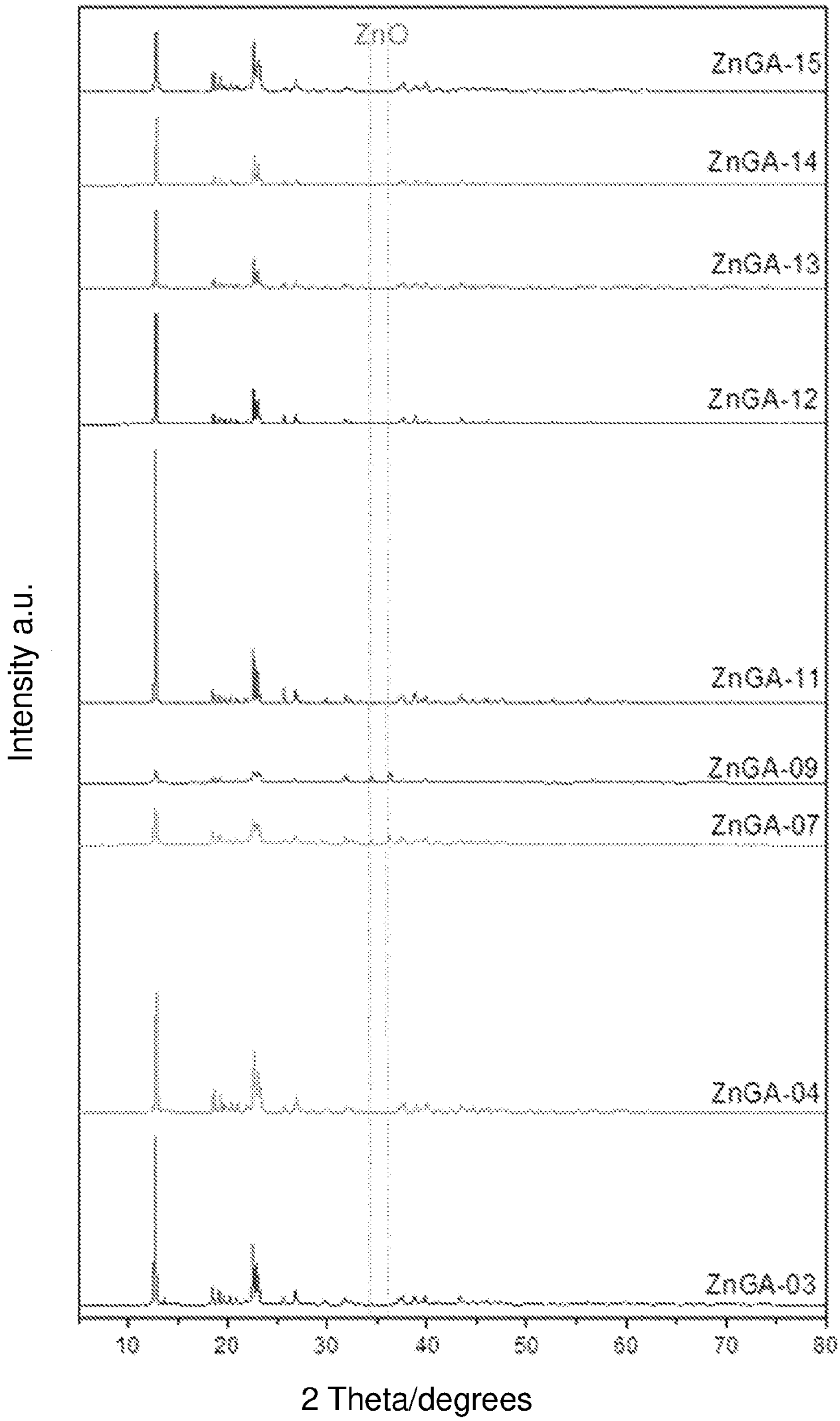
ZnO
ZnGA-15
ZnGA-14
ZnGA-13
ZnGA-12
ZnGA-11
ZnGA-09
ZnGA-07
ZnGA-04
ZnGA-03
Intensity a.u.
10
20
30
40
50
60
70
80
2 Theta/degrees

Fig.3

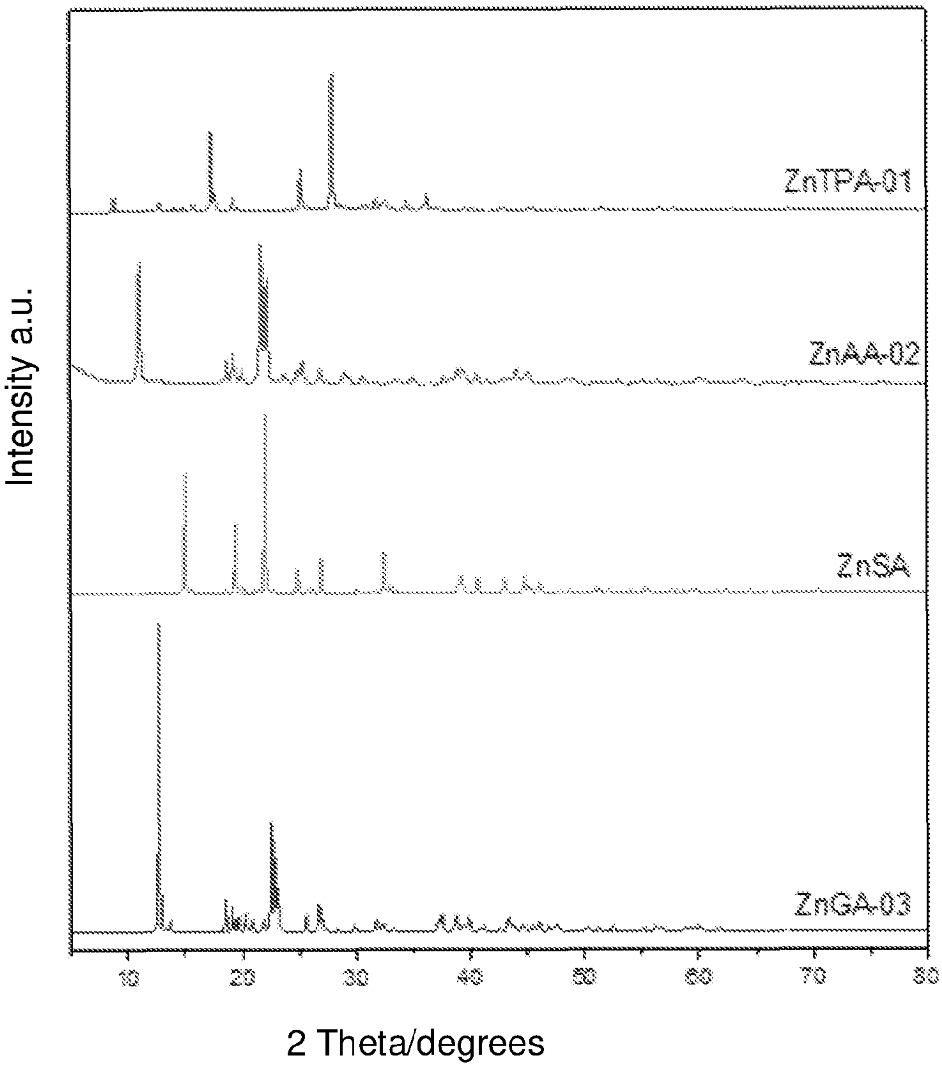
ZnTPA-01
ZnAA-02
ZnSA
ZnGA-03
Intensity a.u.
10
20
30
40
50
60
70
80
2 Theta/degrees

Fig.4

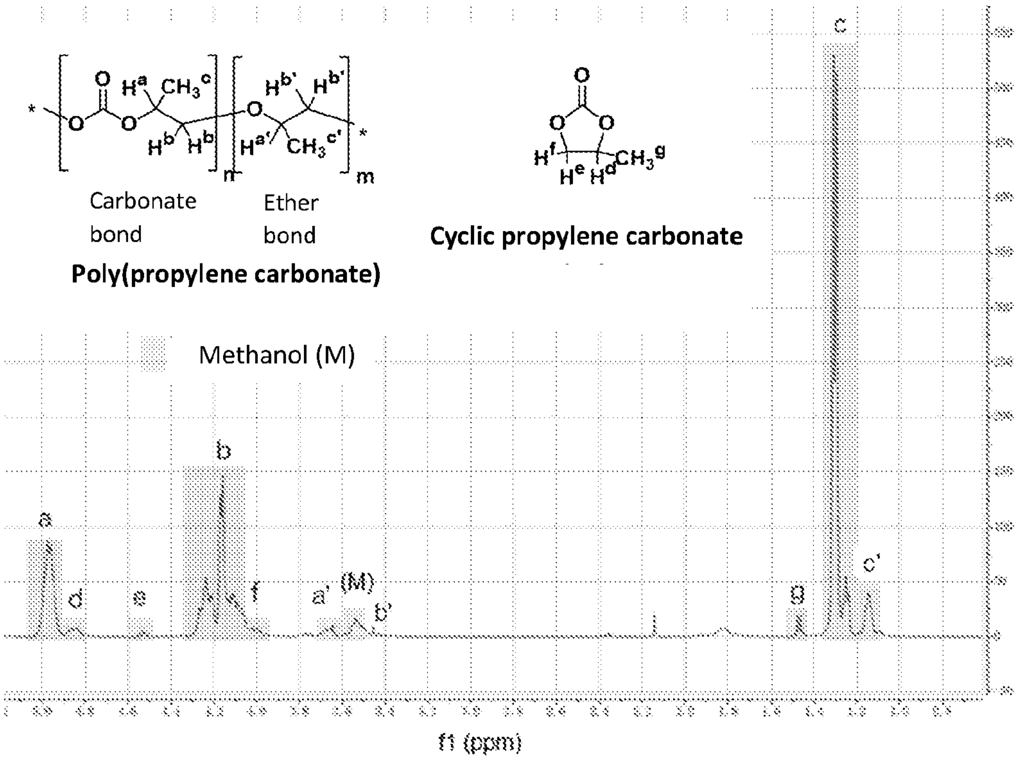
Carbonate bond
Ether bond
Poly(propylene carbonate)
Cyclic propylene carbonate
Methanol (M)
a
b
c
d
e
f
g
a'
(M)
b'
c'
f1 (ppm)

Fig.5

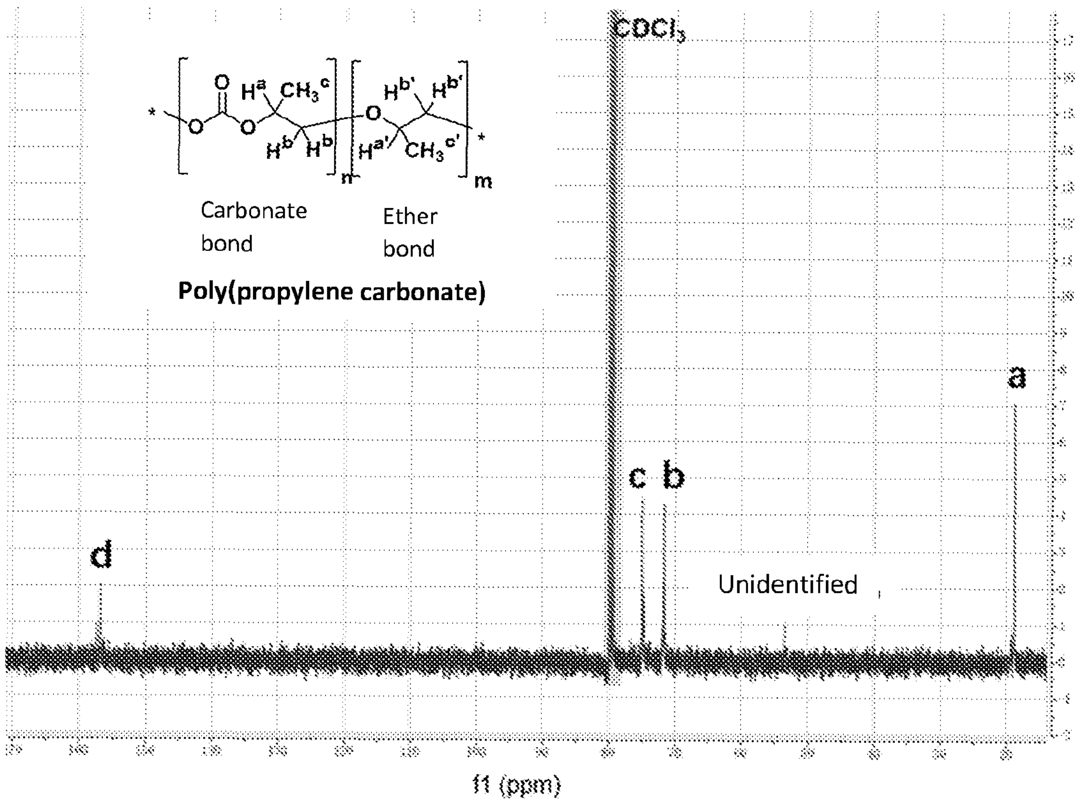
CDCl3
Carbonate bond
Ether bond
Poly(propylene carbonate)
a
c b
d
Unidentified
f1 (ppm)

Fig.6

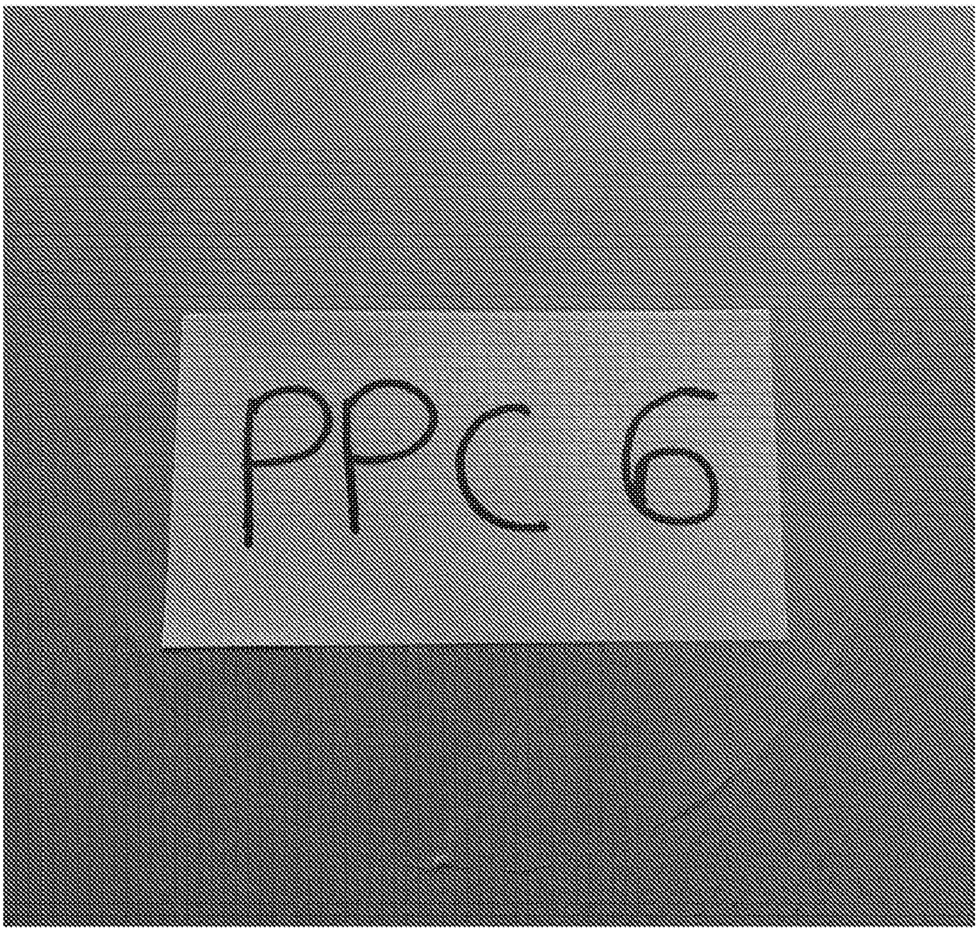

Fig.7

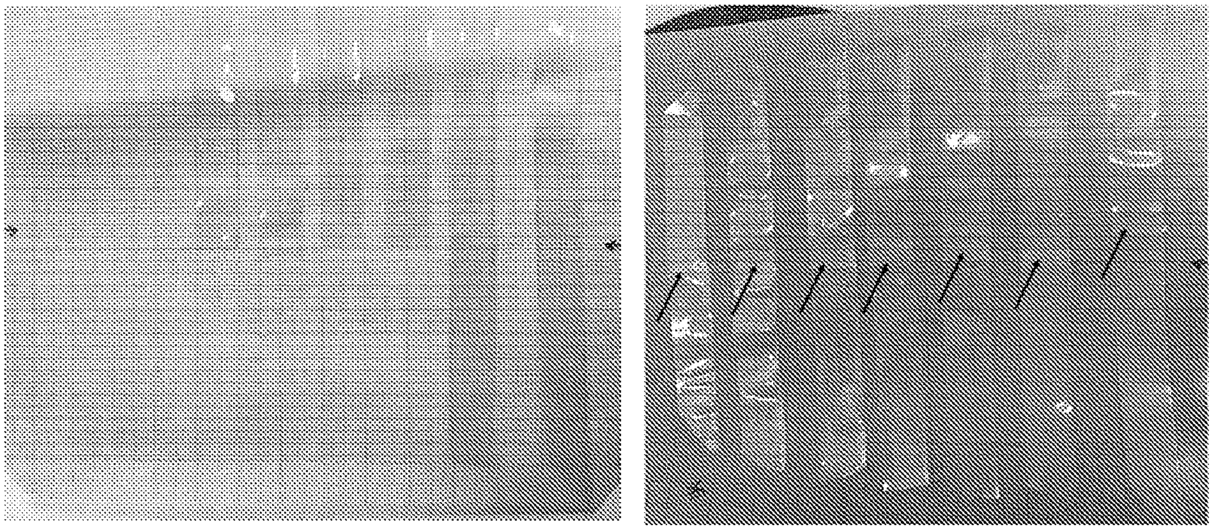

Fig. 8

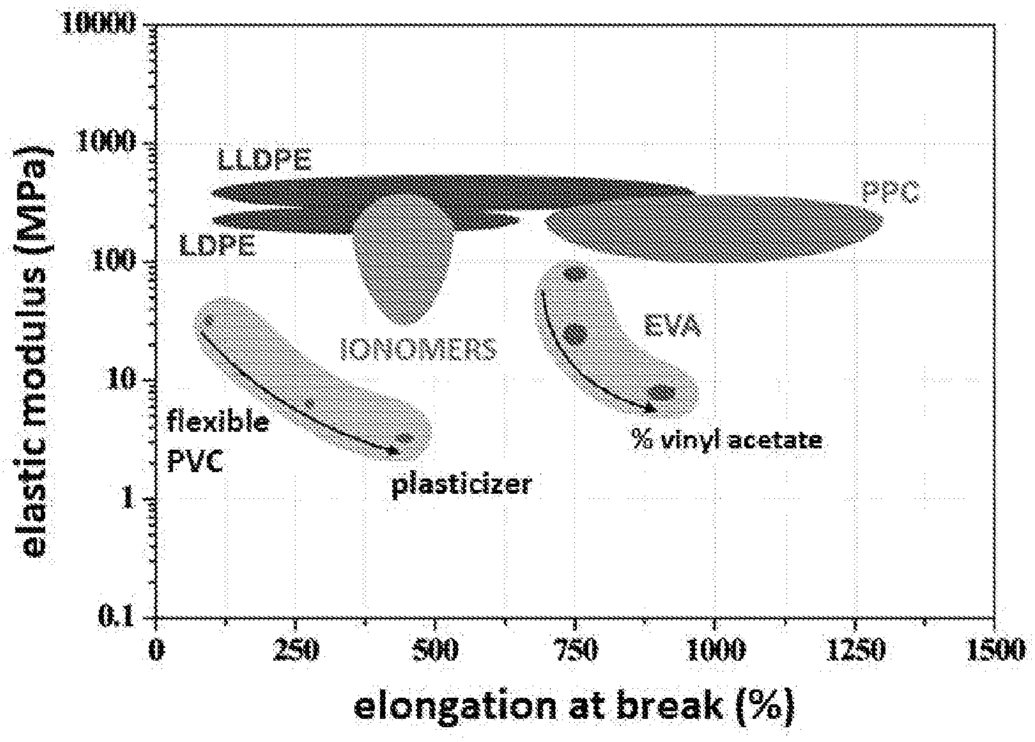
10000
1000
100
10
1
0.1
0
250
500
750
1000
1250
1500
elastic modulus (MPa)
elongation at break (%)
LLDPE
LDPE
PPC
IONOMERS
EVA
flexible
PVC
plasticizer
% vinyl acetate

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101468320 A
- WO 2013034489 A1
- US 2011218320 A1